# DEMANDE DE BREVET EUROPEEN

(11) **EP 1 939 043 A1**
(43) Date de publication de la demande: **02.07.2008**
(21) Numéro de dépôt: 07305008.0
(22) Date de dépôt: 26.12.2007
(51) Int. Cl.: B60R 11/02, F16M 11/14

(54) **Ensemble de support d'accessoires nomades pour véhicule automobile**

(30) Priorité: 28.12.2006 FR 0656031
(71) Demandeur: PEUGEOT CITROËN AUTOMOBILES S.A., 78140 Vélizy Villacoublay (FR)
(72) Inventeur: Valente, Enzo, 94320 Thiais (FR); Duvivier, Arnaud, 91120 Palaiseau (FR)

(57) **Abrégé**

L'ensemble (10) de support d'accessoire nomade (A) pour véhicule automobile, l'ensemble (10) comprend :
- une embase (12) susceptible d'être logée dans un réceptacle du véhicule automobile ;
- un module supérieur (14) comprenant des moyens de réception et de maintien de l'accessoire nomade ;
- des moyens (20) de liaison du module supérieur (14) à l'embase (12).

Les moyens (20) de liaison du module supérieur (14) à l'embase (12) sont des moyens de liaison rotule.

## Description

La présente invention concerne en général les ensembles de support d'accessoires nomades pour véhicule automobile, notamment les supports d'agendas électroniques

Plus précisément, l'invention concerne un ensemble de support d'accessoires nomades pour véhicule automobile, du type comprenant :
- une embase susceptible d'être logée dans un réceptacle du véhicule automobile ;
- un module supérieur comprenant des moyens de réception et de maintien de l'accessoire nomade ;
- des moyens de liaison du module supérieur à l'embase.

Les ensembles de ce type vendus dans le commerce comprennent typiquement un module supérieur pourvu d'une tige, présentant à son extrémité opposée à l'embase une bague d'accrochage d'un support apte à recevoir l'accessoire électronique nomade. La bague est susceptible de pivoter par rapport à l'embase autour de l'axe de la tige, de telle sorte que l'orientation de l'accessoire nomade autour de la tige peut être modifiée pour l'utilisateur.

Toutefois, en dépit de cette rotation possible, l'accessoire n'est pas toujours disposé de manière commode pour l'utilisateur.

Dans ce contexte, l'invention vise à proposer un ensemble de support pour accessoires nomades qui soit plus ergonomique.

Dans ce contexte, l'invention porte sur un ensemble de support du type ci-dessus, caractérisé en ce que les moyens de liaison du module supérieur à l'embase sont des moyens de liaison rotule.

L'ensemble peut également présenter une ou plusieurs des caractéristiques ci-dessus, considérées individuellement ou selon toutes les combinaisons techniquement possibles :
- les moyens de liaison rotule comprennent :
   - un canal ménagé dans l'embase,
   - une restriction ménagée dans une partie centrale du canal et divisant celui-ci en un tronçon proximal et un tronçon distal communiquant avec le tronçon proximal par la restriction,
   - une tige présentant une extrémité liée au module supérieur et une extrémité libre formant une rotule engagée dans le tronçon distal du canal, la tige s'étendant à partir de la rotule à travers le tronçon proximal jusqu'à l'extrémité liée, la rotule présentant un diamètre supérieur à la plus petite dimension de la section de passage de la restriction du canal ;
- l'embase présente la forme d'un étrier et comprend un fond traversé par le tronçon proximal du canal, et deux ailes opposées s'étendant à partir du fond et définissant entre elles le canal ;
- les ailes sont liées l'une à l'autre seulement par le fond ;
- le tronçon distal du canal est délimité par des surfaces des deux ailes convergentes vers la restriction ;
- l'ensemble comprend des moyens pour bloquer de manière amovible le module supérieur par rapport à l'embase ;
- les moyens de blocage comprennent une bague pourvue d'un orifice taraudé et une portion filetée de la tige engagée dans l'orifice taraudé, la bague étant interposée le long de la tige entre le module supérieur et le fond de l'embase ;
- le fond de l'embase est délimité à l'opposé des ailes par une face supérieure en portion de sphère, la bague étant délimitée vers le fond par une face inférieure en portion de sphère conjuguée de ladite face supérieure ;
- les moyens de réception et de maintien de l'accessoire nomade comprennent un support amovible.

D'autres caractéristiques et avantages de l'invention ressortiront de la description détaillée qui en est donnée ci-dessous, à tire indicatif et nullement limitatif, en référence aux figures annexées, parmi lesquelles :
- la figure 1 est une vue en perspective d'un ensemble de support d'accessoires électroniques nomades conforme à l'invention ;
- la figure 2 est une vue en coupe longitudinale de l'ensemble de la figure 1, représentée dans un état où le module supérieur est libre vis-à-vis de l'embase ;
- la figure 3 est une vue similaire à celle de la figure 2, l'ensemble étant représenté dans un état où le module supérieur est bloqué vis-à-vis de l'embase ; et
- la figure 4 est une vue de derrière, partielle, de l'ensemble de support des figures 1 à 3.

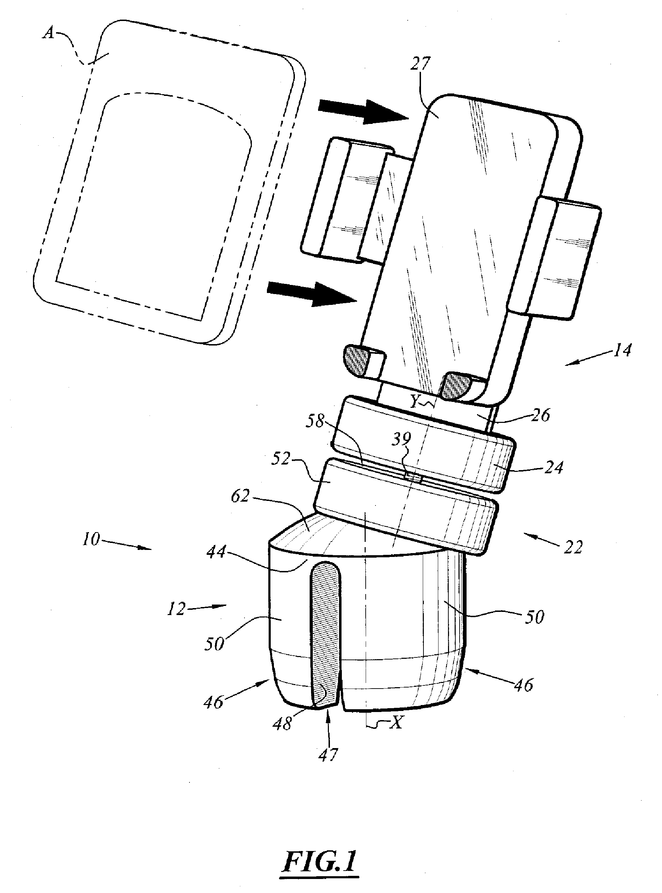

L'ensemble 10 représenté sur la figure 1 est destiné au support d'accessoires électroniques nomades, notamment au support d'agendas électroniques A tels que celui représenté en traits mixtes.

Il comprend :
- une embase 12 susceptible d'être logée dans un réceptacle du véhicule automobile,
- un module supérieur 14 comprenant des moyens de réception et de maintien de l'accessoire électronique nomade,
- des moyens 20 de liaison du module supérieur 14 à l'embase 12,
- des moyens 22 pour bloquer de manière réversible le module supérieur 14 par rapport à l'embase 12.

L'embase 12 est prévue pour être logée typiquement dans un porte gobelet. A cette fin, elle présente une forme générale cylindrique.

Le module supérieur 14 comporte un pied en forme de disque 24, une plaque 26 s'étendant à partir d'une grande face du pied à l'opposé de l'embase 12, un support 27 de réception et de maintien de l'accessoire électronique nomade, et des moyens 28 de fixation du support de réception et de maintien 27 sur la plaque 26.

Le support 27 est de type connu et ne sera pas décrit ici.

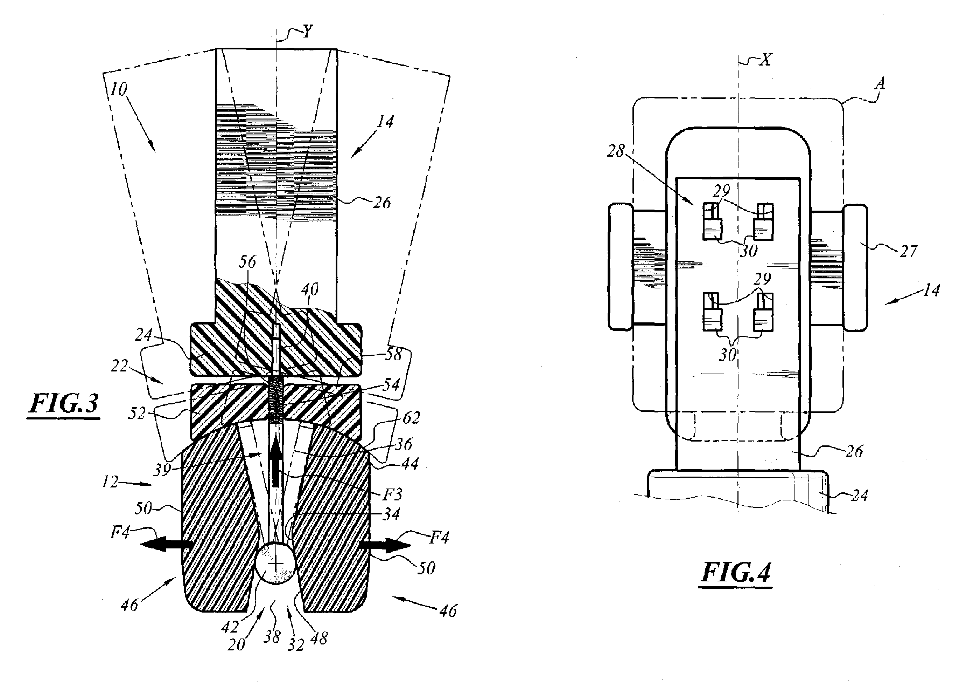

Les moyens de fixation 28 comprennent par exemple des orifices 29 ménagées dans la plaque 26, et dans lesquelles viennent s'engager des crochets 30 formés sur le dos du support 27 (figure 4).

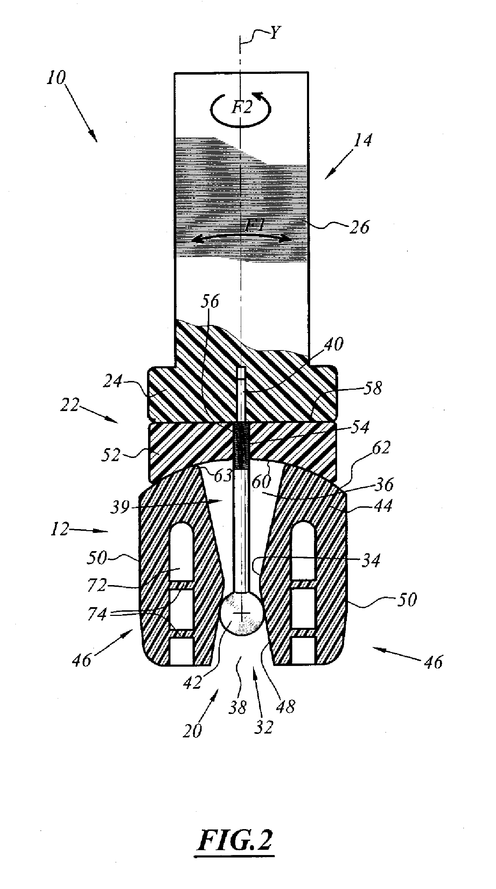

Comme visible sur la figure 2, les moyens 20 de liaison rotule comprennent :
- un canal 32 ménagé dans l'embase 12 et s'étendant selon l'axe central X de l'embase,
- une restriction 34 ménagée dans une partie centrale du canal et divisant celui-ci en un tronçon proximal 36 de forme tronconique et un tronçon distal 38 également de forme tronconique, les tronçons 36 et 38 convergeant tous deux vers la restriction 34,
- une tige 39 présentant une extrémité 40 liée au pied 24 du module supérieur, et une extrémité libre 42 formant une rotule.

Comme on le voir sur les figures 1 et 2, l'embase 12 présente une forme générale d'étrier, et est pourvue d'un fond en disque 44 et de deux ailes opposées 46 s'étendant à partir du fond à l'opposé du module supérieur. Les deux ailes 46 sont séparées par une fente 47 s'étendant selon un diamètre de l'embase 12. La fente 47 débouche dans le canal 32, de part et d'autre de celui-ci.

Le fond 44 est centré sur l'axe central X de l'embase 12. Les deux ailes 46 s'étendent sensiblement parallèlement à l'axe X à partir du fond 44. Les deux ailes 46 présentent des faces internes en vis-à-vis 48 délimitant entre elles le canal 32 et la fente 47, et présentent chacune une face externe 50 en secteur de cylindres.

Les ailes 46 sont liées l'une à l'autre seulement par le fond 44.

Comme le montre la figure 2, le canal 32 traverse entièrement l'embase 12. Les tronçons proximal et distal 36 et 38 du canal 32 sont respectivement tournés vers le module supérieur 14 et à l'opposé de ce module supérieur 14.

L'extrémité 40 de la tige est liée, par exemple vissée, au centre de la grande face du pied 24 tournée vers l'embase. La tige s'étend perpendiculairement au pied 24.

La rotule 42 est engagée dans le tronçon distal 38 du canal. Elle présente un diamètre supérieur à la plus petite dimension de la section de passage de la restriction 34 du canal.

La tige 39 s'étend à partir de la rotule 42 à travers la restriction 34 et à travers le tronçon proximal 36 du canal, l'extrémité liée 40 faisant saillie hors du canal 32.

Les moyens 22 de blocage du module supérieur 16 par rapport à l'embase 12 comprennent une bague 52 pourvue d'un orifice central taraudé 54 et une portion filetée 56 de la tige engagée dans l'orifice taraudé 54. Le filetage de la portion de tige 56 est en prise avec le taraudage de l'orifice 54.

La bague 52 présente sensiblement le même diamètre que le pied 24, l'orifice taraudé 54 étant ménagé selon l'axe central de la bague 52. La bague 52 est interposée le long de la tige 39 entre le pied 24 du module supérieur et le fond 44 de l'embase.

La bague 52 est délimitée vers le pied 24 par une grande face 58 plane, et est délimitée vers le fond 44 par une grande face concave 60 en secteur de sphère. Le fond 44 est quant à lui délimité vers la bague 52 par une face 62 opposée aux ailes, convexe, en secteur de sphère, conjuguée de la face concave 60. Le tronçon proximal 36 du canal débouche au centre de la face 62 par une ouverture tronconique 63.

Le fonctionnement de l'ensemble de support ci-dessus va maintenant être détaillé.

A l'état initial, l'ensemble de support 10 est séparé du porte-gobelet. La bague 52 est en bout de course vers le module supérieur 14, et se trouve en butée contre la base 24 (figure 2). La face concave 60 de la bague repose sur la face convexe 62 de l'embase. Dans cette position, l'écartement entre la face concave 60 de la bague et la rotule 42 est telle, par rapport à l'écartement entre la face convexe 62 et la restriction 34, que la rotule 42 est en contact avec des zones des faces 48 en vis-à-vis qui sont éloignées de la restriction 34. Les ailes 46 de l'embase n'exercent alors pratiquement aucune sollicitation sur la rotule 42. L'ensemble formé par le module supérieur 14, la bague 52 et la tige 38 est libre de se déplacer autour de la rotule 42 par rapport à l'embase 12.

Dans cette position, un utilisateur peut insérer l'embase 12 de l'ensemble de support dans le réceptacle d'un porte-gobelet standard de véhicule automobile. L'utilisateur peut également ajuster la position de l'ensemble formé par le module supérieur 14, la bague 52 et la tige 38 vis-à-vis de l'embase, en les faisant pivoter autour de la rotule 42 (flèche F1 de la figure 2). Les positions extrêmes de cet ensemble sont illustrées en traits mixtes sur la figure 3. La face concave 60 de la bague n'est plaquée contre la face convexe 62 de l'embase que par une force très faible, de telle sorte que l'utilisateur peut faire glisser la face 60 sur la face 62 sans difficulté en vue d'ajuster la position de la partie supérieure 14 par rapport à l'embase. Par ailleurs, l'utilisateur peut également faire pivoter la partie supérieure 14 et la tige 38 autour de l'axe Y de la tige 38 (flèche F2 de la figure 2) par rapport à l'embase 12, de manière à régler l'orientation de la partie supérieure 14 autour de l'axe Y dans la direction souhaitée.

Une fois la position et l'orientation de la partie supérieure 14 réglées, l'utilisateur bloque le module supérieure 14 par rapport à l'embase 12 en faisant tourner la bague 52. Du fait de la coopération entre la partie filetée 56 de la tige et le trou taraudé 54 de la bague, le module supérieur 14 et la tige 38 se déplacent vers le haut de la figure 3 (flèche F3), c'est-à-dire dans le sens d'un éloignement de la partie supérieure 14 par rapport à l'embase 12. La surface concave 60 reste plaquée contre la surface convexe 62. La rotule 42 se rapproche de la restriction 34 de telle sorte qu'elle sollicite les deux ailes 46 de l'embase dans le sens d'un écartement l'une par rapport à l'autre (flèche F4 de la figure 3).

Ce mouvement a un double effet. Il permet d'abord de verrouiller l'embase 12 dans le réceptacle du porte-gobelet, du fait de la sollicitation exercée par la rotule 42 dans le sens d'un écartement mutuel des deux ailes 46 de l'embase. Il permet également d'augmenter la force avec laquelle la bague 52 est serrée contre la face convexe 62 de l'embase, du fait de la forme convergente de la partie distale du canal 32. Une fois la bague suffisamment serrée, il n'est plus possible de modifier la position ou l'orientation de la partie supérieure.

Pour modifier à nouveau la position ou l'orientation du module supérieur, l'utilisateur doit faire tourner la bague en sens inverse, de façon à éloigner la rotule 42 de la restriction 34 et à faire diminuer la force serrant la bague 52 contre la face convexe 62.

Ceci a également pour effet que les deux ailes 46 de l'embase se rapprochent l'une de l'autre, de telle sorte qu'il redevient possible de retirer l'embase 12 du réceptacle du porte-gobelet.

L'ensemble de support décrit ci-dessus présente de multiples avantages.

Le module supérieur, et donc l'accessoire nomade, peut être disposé dans une très large gamme de positions du fait de l'existence d'une liaison rotule entre le module supérieur et l'embase. Cette flexibilité est encore accrue du fait qu'il est possible de faire pivoter le module supérieur et l'accessoire nomade autour de l'axe de la tige.

Ces résultats sont atteints à l'aide d'un mécanisme particulière simple et économique.

De manière avantageuse, ce mécanisme permet, avec les mêmes moyens, de bloquer le module supérieur sur l'embase et de bloquer l'embase dans le réceptacle.

De plus, la coopération de la face concave de la bague et de la face convexe de l'embase assure un bon guidage lors du mouvement du module supérieur autour de la rotule.

L'ensemble décrit ci-dessus peut présenter de multiples variantes.

Il peut être prévu pour recevoir tout type d'accessoires électroniques nomades, par exemple un agenda électronique, mais également un téléphone portable, ou un récepteur GPS. Il peut également être prévu pour recevoir un bloc note.

Le support de réception et de maintien de l'accessoire nomade peut ne pas être séparable du module supérieur, mais, au contraire, être d'une pièce avec celui-ci, et par exemple venu de moulage avec celui-ci.

L'embase 12 peut comporter des évidements 70 de manière à alléger l'ensemble de support. Il est dans ce cas possible de prévoir des nervures 72 à travers les évidements en vue de rigidifier l'embase.

## Revendications

1. Ensemble (10) de support d'accessoire nomade (A) pour véhicule automobile, l'ensemble (10) comprenant :
- une embase (12) susceptible d'être logée dans un réceptacle du véhicule automobile ;
- un module supérieur (14) comprenant des moyens (27) de réception et de maintien de l'accessoire nomade (A) ;
- des moyens (20) de liaison du module supérieur (14) à l'embase (12) ;
**caractérisé en ce que** les moyens (20) de liaison du module supérieur (14) à l'embase (12) sont des moyens de liaison rotule.

2. Ensemble selon la revendication 1, **caractérisé en ce que** les moyens (20) de liaison rotule comprennent :
- un canal (32) ménagé dans l'embase (12),
- une restriction (34) ménagée dans une partie centrale du canal (32) et divisant celui-ci en un tronçon proximal (36) et un tronçon distal (38) communiquant avec le tronçon proximal (36) par la restriction (34),
- une tige (39) présentant une extrémité (40) liée au module supérieur (14) et une extrémité libre (42) formant une rotule engagée dans le tronçon distal (38) du canal (32), la tige (39) s'étendant à partir de la rotule (42) à travers le tronçon proximal (36) jusqu'à l'extrémité liée (40), la rotule (42) présentant un diamètre supérieur à la plus petite dimension de la section de passage de la restriction (34) du canal (32).

3. Ensemble selon la revendication 2, **caractérisé en ce que** l'embase (12) présente la forme d'un étrier et comprend un fond (44) traversé par le tronçon proximal (36) du canal (32), et deux ailes (46) opposées s'étendant à partir du fond (44) et définissant entre elles le canal (32).

4. Ensemble selon la revendication 3, **caractérisé en ce que** les ailes (46) sont liées l'une à l'autre seulement par le fond (44).

5. Ensemble selon la revendication 3 ou 4, **caractérisé en ce que** le tronçon distal (38) du canal (32) est délimité par des surfaces des deux ailes (46) convergentes vers la restriction (34).

6. Ensemble selon la revendication 3 à 5, **caractérisé en ce qu'**il comprend des moyens (22) pour bloquer de manière amovible le module supérieur (14) par rapport à l'embase (12).

7. Ensemble selon la revendication 6, **caractérisé en ce que** les moyens de blocage (22) comprennent une bague (52) pourvue d'un orifice taraudé (54) et une portion filetée (56) de la tige (39) engagée dans l'orifice taraudé (54), la bague (52) étant interposée le long de la tige (39) entre le module supérieur (14) et le fond (44) de l'embase (12).

8. Ensemble selon la revendication 7, **caractérisé en ce que** le fond (44) de l'embase (12) est délimité à l'opposé des ailes (46) par une face supérieure (62) en portion de sphère, la bague (52) étant délimitée vers le fond (44) par une face inférieure (60) en portion de sphère conjuguée de ladite face supérieure (62).

9. Ensemble selon l'une quelconque des revendications précédentes, **caractérisé en ce que** les moyens de réception et de maintien de l'accessoire nomade (A) comprennent un support amovible (27).
